# EUROPEAN PATENT APPLICATION

(11) **EP 4 561 037 A1**
(43) Date of publication of application: **28.05.2025**
(21) Application number: 23857719.1
(22) Date of filing: 23.08.2023
(51) Int. Cl.: H04M 1/03, H04M 1/02, H04R 3/12

(54) **ELECTRONIC APPARATUS INCLUDING PLURALITY OF SPEAKERS**

(30) Priority: 23.08.2022 KR 20220105790; 14.09.2022 KR 20220115838
(71) Applicant: Samsung Electronics Co., Ltd., Suwon-si, Gyeonggi-do 16677 (KR)
(72) Inventor: KANG, Taeuk, Suwon-si, Gyeonggi-do 16677 (KR); HAN, Junhee, Suwon-si, Gyeonggi-do 16677 (KR); KANG, Kyungmoon, Suwon-si, Gyeonggi-do 16677 (KR); PARK, Seonguk, Suwon-si, Gyeonggi-do 16677 (KR); KIM, Jeongseob, Suwon-si, Gyeonggi-do 16677 (KR)
(74) Representative: Gulde & Partner
(86) International application number: PCT/KR2023/012483
(87) International publication number: WO 2024/043687

(57) **Abstract**

A foldable electronic apparatus according to various embodiments of the present invention may comprise: a foldable housing that has a plurality of sub-housings and at least one hinge and folds and unfolds; a foldable display that is disposed on a first surface, oriented in a first direction, of the foldable housing and folds and unfolds according to the folding and unfolding of the foldable housing; a plurality of speakers that are arranged in at least two of the plurality of sub-housings of the foldable housing and output multi-channel sound having a plurality of audio channels; and a sound processor electrically connected to each of the plurality of speakers. The sound processor may be configured to detect the folding state of the foldable housing, calculate the respective relative positions of the plurality of speakers on the basis of the folding state, and output the plurality of audio channels to the plurality of speakers, respectively, on the basis of the calculated respective relative positions of the plurality of speakers.

## Description

### [Technical Field]

Various embodiments disclosed herein relate to an electronic apparatus and, more particularly, to an electronic apparatus including a plurality of speakers.

### [Background Art]

Electronic apparatuses may include an audio output apparatus, such as a speaker, for outputting sound. The audio output apparatus may generate sound by vibration of air, for example, by vibrating a vibrator driven by electromagnetic induction or a piezoelectric element, according to an electric signal containing audio information. The sound reproduced by the electronic apparatus may include a plurality of audio channels, such as stereo sound, and the electronic apparatus may include a plurality of audio output apparatuses spaced apart from each other within a housing of the electronic apparatus to effectively reproduce the sound. Due to the plurality of audio channels output from different speakers, users may feel directionality or a sense of space in the sound.

Electronic apparatuses require a small profile for portability, and a wide display region to provide extensive information to users. In order to achieve both the small profile and the wide display region of the electronic apparatus, various form factors, such as foldable electronic apparatuses equipped with flexible displays, are being used, moving beyond the existing flat form factor. Electronic apparatuses having foldable form factors may include a foldable housing configured to fold and unfold around at least one hinge.

### [Disclosure of Invention]

### [Technical Solution]

When folding the housing of the foldable electronic apparatus, the positions of the speakers arranged in the housing may be changed. As the positions of the speakers configured to output different audio channels are changed, the spatial sound effect generated by the audio may become distorted.

The various embodiments disclosed herein may provide an electronic apparatus capable of reducing or minimizing spatial sound distortion that occurs during folding.

A foldable electronic apparatus according to various embodiments of the disclosure may include a foldable housing having a plurality of sub-housings and at least one hinge and configured to be folded and unfolded, a foldable display arranged on a first surface of the foldable housing and configured to be folded and unfolded according to the folding and unfolding of the foldable housing, the first surface facing a first direction, a plurality of speakers positioned in at least two of the plurality of sub-housings of the foldable housing and configured to output multi-channel sound having a plurality of audio channels, and a processor electrically connected to each of the plurality of speakers. The processor may be configured to detect a folding state of the foldable housing, calculate respective relative positions of the plurality of speakers, based on the folding state, and output the plurality of audio channels to the plurality of speakers, respectively, based on the calculated respective relative positions of the plurality of speakers.

In various embodiments, the foldable electronic apparatus may include a folding sensor configured to detect a folding and unfolding state of the foldable housing, and the processor may detect a value for determining the folding and unfolding state of the foldable housing through the folding sensor.

In various embodiments, the foldable housing may include a first sub-housing, a second sub-housing, a third sub-housing, a first hinge configured to foldably couple the first sub-housing and the second sub-housing to each other, and a second hinge configured to foldably couple the second sub-housing and the third sub-housing to each other. The plurality of speakers may include a first speaker and a second speaker arranged in the first sub-housing and a third speaker and a fourth speaker arranged in the third sub-housing. The plurality of audio channels may include a first audio channel and a second audio channel.

In various embodiments, the folding directions of the first hinge and the second hinge are the same, and the processor may be configured to output the first audio channel through the first speaker and the second speaker and output the second audio channel through the third speaker and the fourth speaker in an unfolded state of the first hinge and the second hinge, and output the first audio channel through the third speaker and the fourth speaker and output the second audio channel through the first speaker and the second speaker in a folded state of the first hinge and the second hinge.

In various embodiments, the processor may be configured to receive information indicating a direction in which the foldable electronic apparatus is oriented, and, when the foldable electronic apparatus is oriented such that the hinges are vertical with respect to a user, output the first audio channel through the first speaker and the second speaker and output the second audio channel through the third speaker and the fourth speaker in an unfolded state of the first hinge and the second hinge, and output the first audio channel through the third speaker and the fourth speaker and output the second audio channel through the first speaker and the second speaker in a folded state of the first hinge and the second hinge.

In various embodiments, the foldable electronic apparatus may include an attitude sensor configured to measure orientation thereof, and the processor may receive, from the attitude sensor, information indicating a direction in which the foldable electronic apparatus is oriented.

In various embodiments, the foldable electronic apparatus may include a display controller configured to control the foldable display, and the processor may determine an oriented direction of the foldable electronic apparatus, based on orientation of an image displayed on the foldable display.

In various embodiments, the folding directions of the first hinge and the second hinge are opposite to each other, and the processor may be configured to output the first audio channel through the first speaker and the second speaker and output the second audio channel through the third speaker and the fourth speaker in an unfolded state of the first hinge and the second hinge, and output the first audio channel through the third speaker and the fourth speaker and output the second audio channel through the first speaker and the second speaker in a folded state of the first hinge and the second hinge.

In various embodiments, the processor may be configured to receive orientation information of the foldable electronic apparatus from the attitude sensor, and, when the foldable electronic apparatus is oriented such that the hinges are vertical with respect to the user, output the first audio channel through the first speaker and the second speaker and output the second audio channel through the third speaker and the fourth speaker in an unfolded state of the first hinge and the second hinge, and output the first audio channel through the third speaker and the fourth speaker and output the second audio channel through the first speaker and the second speaker in a folded state of the first hinge and the second hinge.

In various embodiments, the foldable electronic apparatus may include an attitude sensor configured to measure the orientation thereof, and the processor may receive, from the attitude sensor, information indicating a direction in which the foldable electronic apparatus is oriented.

In various embodiments, the foldable electronic apparatus may include a display controller configured to control the foldable display, and the processor may determine a direction in which the foldable electronic apparatus is oriented, based on orientation of an image displayed on the display.

In various embodiments, the foldable display may include a first display region positioned in the first sub-housing, a second display region positioned in the second sub-housing, and a third display region positioned in the third sub-housing, and the foldable housing may be folded such that the first display region is exposed to the outside when folded. The processor may be configured to determine whether the first display region is in operation and output the first audio channel through the first speaker and the second speaker and the second audio channel through the third speaker and the fourth speaker when the first display is in use in a state where the first hinge and the second hinge are folded.

In various embodiments, the foldable electronic apparatus may include an auxiliary display disposed on a surface of the third housing, the surface being opposite the surface on which the foldable display is disposed, and the processor may be configured to determine whether the auxiliary display is in operation, and, when the auxiliary display is in use in a state in which the first hinge and the second hinge are folded, output the first audio channel through the third speaker and the fourth speaker and the second audio channel through the first speaker and the second speaker.

According to various embodiments of the disclosure, a processor of a foldable electronic apparatus including a foldable housing having a plurality of sub-housings and at least one hinge and configured to be folded and unfolded, a foldable display disposed on a first surface of the foldable housing and configured to be folded and unfolded according to the folding and unfolding of the foldable housing, the first surface facing a first direction, and a plurality of speakers positioned in at least two of the plurality of sub-housings of the foldable housing and configured to output multi-channel sounds having a plurality of audio channels may be electrically connected to the plurality of speakers and may be configured to detect a folding state of the foldable housing, calculate respective relative positions of the plurality of speakers, based on the folding state, and output the plurality of audio channels to the plurality of speakers, respectively, based on the calculated respective relative positions of the plurality of speakers.

In various embodiments, the foldable electronic apparatus may include a folding sensor configured to detect a folding and unfolding state of the foldable housing, and the processor may receive the folding and unfolding state of the foldable housing from the folding sensor.

In various embodiments, the foldable housing may include a first sub-housing, a second sub-housing, a third sub-housing, a first hinge configured to foldably couple the first sub-housing and the second sub-housing to each other, and a second hinge configured to foldably couple the second sub-housing and the third sub-housing to each other. The plurality of speakers may include a first speaker and a second speaker arranged in the first sub-housing and a third speaker and a fourth speaker arranged in the third sub-housing. The plurality of audio channels may include a first audio channel and a second audio channel.

In various embodiments, the processor may be configured to receive orientation of the foldable electronic apparatus, and, when the foldable electronic apparatus is oriented such that the hinges are vertical with respect to the user, output the first audio channel through the first speaker and the second speaker and output the second audio channel through the third speaker and the fourth speaker in an unfolded state of the first hinge and the second hinge, and output the first audio channel through the third speaker and the fourth speaker and output the second audio channel through the first speaker and the second speaker in a folded state of the first hinge and the second hinge.

In various embodiments, the foldable electronic apparatus may include an attitude sensor configured to measure orientation of the foldable electronic apparatus and may receive an orientated direction of the foldable electronic apparatus from the attitude sensor.

In various embodiments, the foldable display may include a display controller configured to control the foldable display, and the processor may determine a direction in which the foldable electronic apparatus is oriented, based on orientation of an image displayed on the foldable display.

In various embodiments, the foldable electronic apparatus may include an auxiliary display disposed on a surface of the second sub-housing, the surface being opposite the surface on which the foldable display is disposed, and the processor may be configured to determine whether the auxiliary display is in operation, and, when the auxiliary display is in use in a state in which the first hinge and the second hinge are folded, output the first audio channel through the third speaker and the fourth speaker and the second audio channel through the first speaker and the second speaker.

Various embodiments disclosed herein may provide an electronic apparatus which reduces or minimizes sound distortion by changing audio channels output from a plurality of speakers when a foldable housing is folded.

### [Brief Description of Drawings]

With regard to the description of the drawings, the same or like reference signs may be used to designate the same or like elements.
FIG. 1 is a block diagram illustrating an electronic device in a network environment according to various embodiments.
FIG. 2 is a block diagram illustrating a processor and various components of an electronic apparatus connected thereto, according to various embodiments.
FIG. 3A is a plan view and a cross-sectional view of an electronic apparatus in a fully unfolded state, according to various embodiments.
FIG. 3B is a plan view and a cross-sectional view of an electronic apparatus being folded, according to various embodiments.
FIG. 3C is a plan view and a cross-sectional view of an electronic apparatus in a fully folded state, according to various embodiments.
FIG. 3D is a perspective view of an electronic apparatus in a fully folded state, according to various embodiments.
FIG. 4 is a flowchart illustrating the operation of a processor of an electronic apparatus according to various embodiments of the disclosure.
FIG. 5A is a plan view and a cross-sectional view of an electronic apparatus in a fully unfolded state, according to various embodiments.
FIG. 5B is a plan view and a cross-sectional view of an electronic apparatus being folded, according to various embodiments.
FIG. 5C is a plan view and a cross-sectional view of an electronic apparatus in a fully folded state, according to various embodiments.
FIG. 5D is a perspective view of an electronic apparatus in a fully folded state, according to various embodiments.
FIG. 5E is a perspective view of the lower surface of an electronic apparatus in a fully folded state, according to various embodiments.
FIG. 6 is a flowchart illustrating the operation of a processor of an electronic apparatus according to various embodiments of the disclosure.
FIG. 7A is a rear plan view of an electronic apparatus according to various embodiments.
FIG. 7B is a perspective view of an electronic apparatus in a folded state, according to various embodiments.
FIG. 8 is a flowchart illustrating the operation of a processor according to various embodiments.

### [Mode for the Invention]

Hereinafter, exemplary embodiments of the disclosure will be described in detail in conjunction with the accompanying drawings. In the drawings, for example, the sizes and shapes of members may be exaggerated for the sake of descriptive convenience and clarity, and when actually implemented, the illustrated shapes may be modified. Therefore, the embodiment of the disclosure should not be construed to be limited to particular shapes of parts described and shown in the specification.

Throughout the drawings, the same or like reference numerals designate the same or like elements. As used in the specification, the term "and/or" includes any one of items enumerated and all combinations of one or more thereof.

Embodiments of the disclosure are provided to more completely explain the disclosure to those skilled in the art to which the disclosure pertains, various changes and modification in form may be made to the embodiments as described below, and the scope of the disclosure is not limited thereto. Rather, these embodiments are presented to more fully and completely describe the disclosure and completely transfer the idea of the disclosure to those skilled in the art.

The terms used in the specification are used to describe embodiments, and are not intended to limit the scope of the disclosure. Although expressed in a singular form, the singular form may include a plural form unless definitely indicated in the context. As used herein, the term "comprise" or "comprising" is intended to specify the existence of mentioned shapes, numbers, steps, operations, elements, components, and/or groups thereof, and does not preclude the possible existence or addition of other shapes, numbers, steps, operations, elements, components, and/or groups thereof. Also, it will be appreciated to those skilled in the art that a structure or shape disposed "adjacent to" any other shape may have a portion overlapping the other shape or disposed under the other shape.

In the specification, relative terms such as "below", "above", "upper", "lower", "horizontal", and "vertical" may be used to describe the relationship between one element, layer, or area and any other element, layer, or area. It should be appreciated that, in addition to the directions illustrated in the drawings, these terms also include other directions.

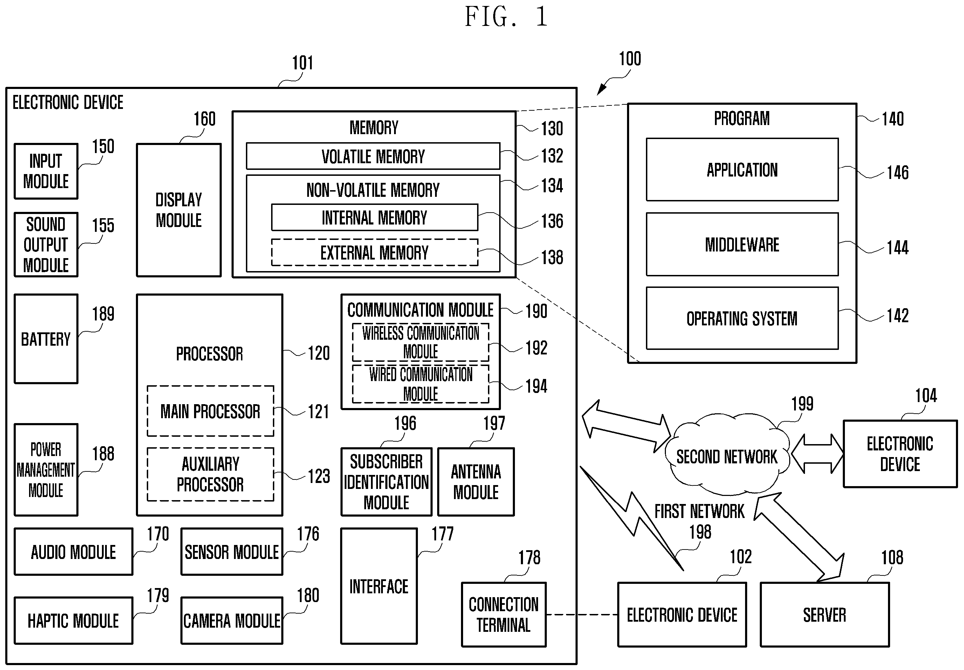

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. **In** such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to various embodiments, a portable electronic apparatus (e.g., the electronic apparatus 101 of FIG. 1) may have a foldable housing divided around a folding axis into two housings. A first part of a display (e.g., a flexible display) may be disposed in a first housing, and a second part of the display may be disposed in a second housing. The foldable housing may be implemented in an in-folding method in which the first part and the second part face each other when the portable electronic apparatus is folded. Alternatively, the foldable housing may also be implemented in an out-folding method in which the first part and the second part face opposite each other when the portable electronic apparatus is folded. A surface on which the first part and the second part of the display are disposed may be defined as a front surface of the portable electronic apparatus, an opposite surface thereof may be defined as a rear surface of the portable electronic apparatus, and a surface surrounding a space between the front surface and the rear surface may be defined as a lateral surface of the portable electronic apparatus.

According to the embodiments mentioned herein, the case of in-folding, in which the first part of the display on the first housing is arranged to face the second part of the display on the second housing, has been illustrated and described as an example for the folding of the display of the portable electronic apparatus. However, the case of out-folding, in which the first part of the display on the first housing is arranged to face opposite the second part of the display on the second housing, may also apply to the folding of the display according to an embodiment. Furthermore, embodiments may also be applied to a multi-foldable electronic apparatus where in-folding and in-folding are combined, in-folding and out-folding are combined, or out-folding and out-folding are combined.

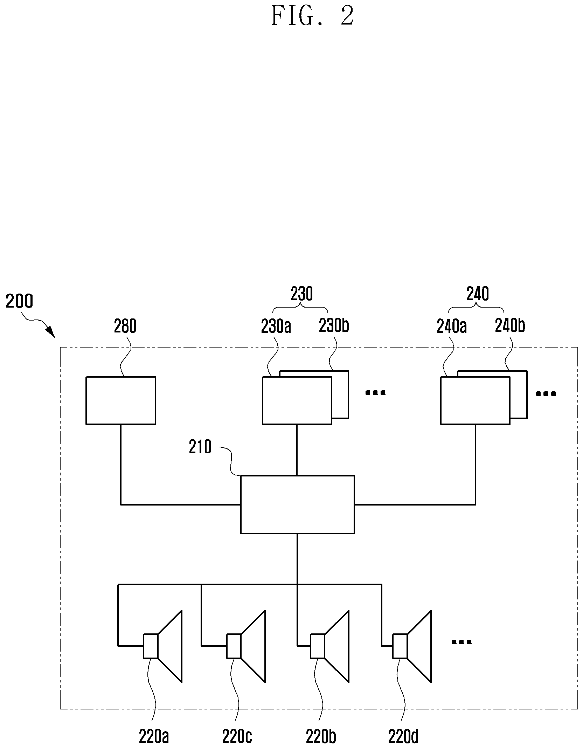

FIG. 2 is a block diagram illustrating a processor 210 and various components of a foldable electronic apparatus 200 connected thereto, according to various embodiments.

Referring to FIG. 2, the foldable electronic apparatus 200 (e.g., the electronic apparatus 101 of FIG. 1) may include the processor 210 and a plurality of speakers 220a, 220b, 220c, 220d electrically connected to the processor 210.

The speaker may be a component configured to output sound of the foldable electronic apparatus 200 from an electrical signal. The sound output by the foldable electronic apparatus 200 through the speaker may be a multi-channel sound having a plurality of audio channels, such as stereo or quadraphonic sound. To this end, the foldable electronic apparatus 200 may include the plurality of speakers 220a, 220b, 220c, 220d. Four speakers are illustrated in FIG. 2, but this is exemplary and the disclosure is not limited thereto.

The processor 210 may be a component configured to process sound source information to generate electrical signals required for output through the speaker and provide the signals to the speaker for output. In various embodiments, the processor 210 may provide a plurality of audio channel signals to the plurality of speakers. For example, when reproducing multi-channel sound (e.g., stereo sound) having two audio channels, the processor 210 may provide a first audio channel (e.g., a left audio channel) to a first speaker 220a and a third speaker 220c and may provide a second audio channel (e.g., a right audio channel) to a second speaker 220b and a fourth speaker 220d. In addition, the processor 210 may be configured to change the plurality of audio channel signals to be provided to the plurality of speakers, as needed. For example, when the relative left and right positions of the plurality of speakers 220a, 220b, 220c, 220d are changed, the processor 210 may change the left audio channel signal and the right audio channel signal accordingly and provide same to the plurality of speakers. The details of the operation will be described later. In various embodiments, the processor 210 may be a separate processor 210 disposed in a main processor (e.g., the processor 120 of FIG. 1) and/or an audio module (e.g., the audio module 170 of FIG. 1) of the foldable electronic apparatus 200. In various embodiments, the processor 210 may be a part of a circuit disposed in the main processor (e.g., the processor 120 of FIG. 1) or may be implemented as a processor 210 running on the main processor (e.g., the processor 120 of FIG. 1).

In various embodiments, the processor 210 may be electrically connected to a folding sensor 230. The folding sensor 230 may be a sensor configured to detect a folding or unfolding state of the foldable electronic apparatus 200 described below or detect a folding angle of the foldable electronic apparatus 200. The processor 210 (e.g., an application processor or a sensor hub processor) may detect a folding state or receive a folding angle from the folding sensor 230 and may assign a plurality of audio channels to the plurality of speakers, based on the relative positions of the plurality of speakers arranged in the housing of the foldable electronic apparatus 200.

In various embodiments, the processor 210 may be electrically connected to an attitude sensor 240 of the foldable electronic apparatus 200. The attitude sensor 240 may include a gravity sensor 240a and/or a gyro sensor 240b. The processor 210 may identify the posture of the foldable electronic apparatus 200, based on the value detected by the attitude sensor 240, thereby calculating the relative positions of the plurality of speakers and assigning the plurality of audio channels to the plurality of speakers accordingly.

In various embodiments, the processor 210 may be electrically connected to a display controller 280. The display controller 280 may be a component configured to drive and control the display (e.g., the display module 160 of FIG. 1) of the foldable electronic apparatus 200. The display controller 280 may be a control circuit disposed in the display module (e.g., the display module 160 of FIG. 1) and/or a part of the main processor (e.g., the processor 120 of FIG. 1) of the foldable electronic apparatus 200. The foldable electronic apparatus 200 of the disclosure may have a display divided into a plurality of regions and/or a plurality of displays. The display controller 280 may provide information about whether each display and/or individual display regions of the foldable electronic apparatus 200 are in use, as well as the display's orientation (e.g., whether in portrait or landscape mode) to the processor 210. The processor 210 may calculate the relative positions of the plurality of speakers through information about whether the display is in use and which part of the display is in use and may assign the plurality of audio channels to the plurality of speakers accordingly.

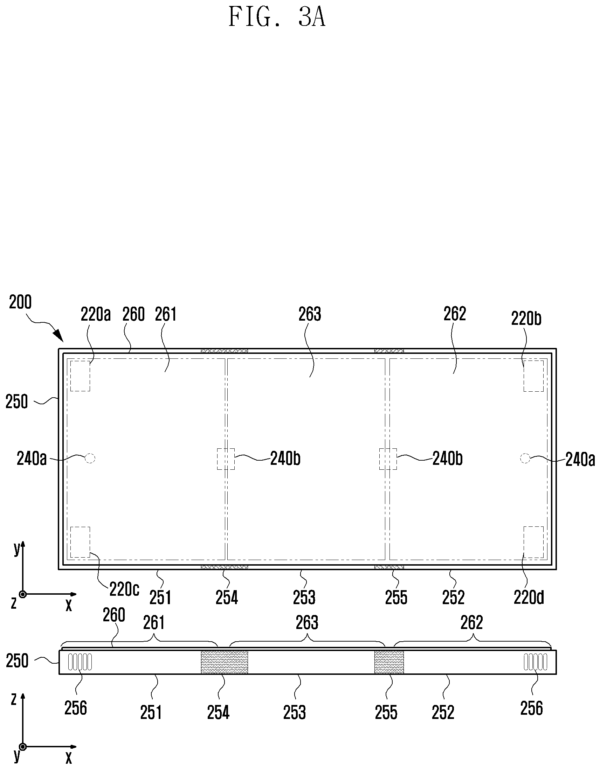

FIG. 3A is a plan view and a cross-sectional view of the foldable electronic apparatus 200 in a fully unfolded state, according to various embodiments.

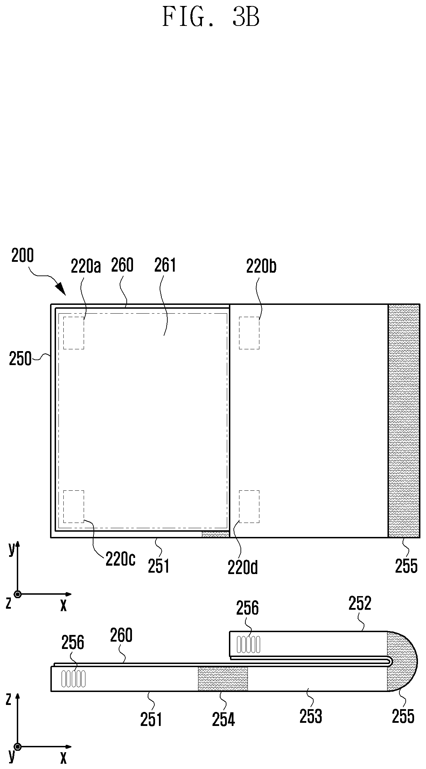

FIG. 3B is a plan view and a cross-sectional view of the foldable electronic apparatus 200 being folded, according to various embodiments.

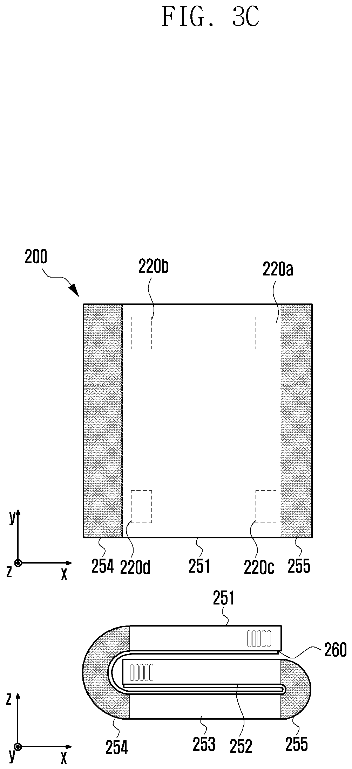

FIG. 3C is a plan view and a cross-sectional view of the foldable electronic apparatus 200 in a fully folded state, according to various embodiments.

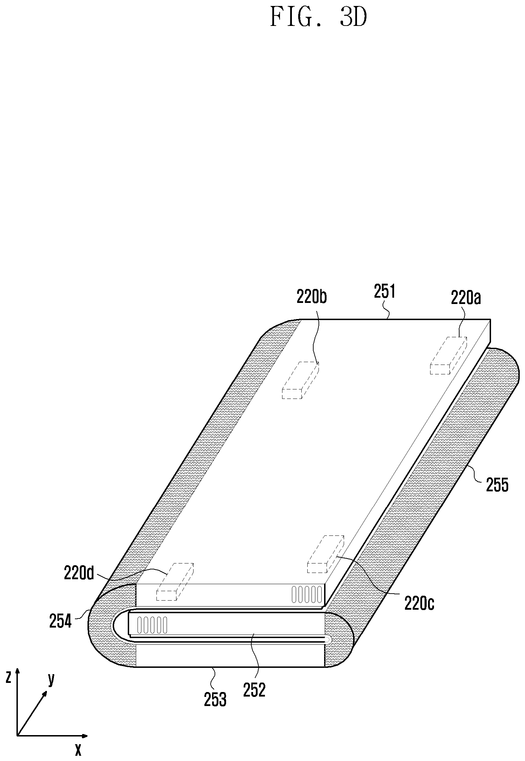

FIG. 3D is a perspective view of the foldable electronic apparatus 200 in a fully folded state, according to various embodiments.

Referring to FIGS. 3A to 3D, the foldable electronic apparatus 200 may include a foldable housing 250, a foldable display 260, and a plurality of speakers 220a, 220b, 220c, 220d.

The foldable housing 250 may have an internal space in which various internal components of the foldable electronic apparatus 200 are arranged. The foldable housing 250 may include a plurality of sub-housings (e.g., a first sub-housing 251, a second sub-housing 252, and a third sub-housing 253) and a hinge (e.g., a first hinge 254 and a second hinge 255) configured to foldably connect the plurality of sub-housings to each other and may be folded and unfolded. In various embodiments, the first hinge 254 may foldably couple the first sub-housing 251 and the third sub-housing 253 to each other, and the second hinge 255 may foldably couple the third sub-housing 253 and the second sub-housing 252 to each other. The third sub-housing 253 may be positioned between the first sub-housing 251 and the second sub-housing 252 with the first hinge 254 and the second hinge 255 interposed therebetween. In various embodiments, the first hinge 254 and the second hinge 255 of the foldable housing 250 may allow folding in the same direction.

The foldable display 260 may be a display arranged on one side (e.g., a side facing the z direction) of the foldable housing 250 and configured to be folded and unfolded according to the folding and unfolding of the foldable housing 250. The foldable display 260 may include, for example, a flexible organic light-emitting diode (OLED).

In various embodiments, the foldable display 260 may include a plurality of display regions divided based on the axis of the folding motion. For example, the foldable display 260 of the foldable electronic apparatus 200 including the first hinge 254 and the second hinge 255 may include a first display region 261, a second display region 262, and a third display region 263, divided based on the center of the first hinge 254 and the center of the second hinge 255.

In various embodiments, the foldable electronic apparatus 200 may include a folding sensor 230. The folding sensor 230 may include, for example, a proximity folding sensor 230a configured to detect proximity between the sub-housings and/or a folding angle sensor 230b configured to detect a folding angle of the hinges of the foldable housing 250. The proximity folding sensor 230a may include a magnetic proximity sensor, such as a Hall effect sensor, or an optical proximity sensor. The folding angle sensor 230b may include, for example, a rotary encoder, a Hall effect rotation sensor, and/or a gyro sensor.

The plurality of speakers may be arranged inside the foldable housing 250 and may output multi-channel sound having a plurality of audio channels. In various embodiments, the foldable housing 250 may include a speaker grill 256 configured such that sound output from the plurality of speakers is emitted to the outside of the foldable housing 250.

In various embodiments, a first speaker 220a and a third speaker 220c may be arranged in the first sub-housing 251, and a second speaker 220b and a fourth speaker 220d may be arranged in the second sub-housing 252. Referring to FIG. 3A, when the hinges are oriented vertically with respect to a user (which may be referred to as a "landscape orientation" because the long axis is oriented horizontally with respect to the user) while the foldable electronic apparatus 200 is in a fully unfolded state (which may be referred to as a "first state"), in one example, the first speaker 220a and the third speaker 220c may be positioned on the left side with respect to the user, and the second speaker 220b and the fourth speaker 220d may be positioned on the right side with respect to the user. In this orientation, the first speaker 220a and the third speaker 220c may output a left audio channel of multi-channel sound (e.g., stereo sound), and the second speaker 220b and the fourth speaker 220d may output a right audio channel of the multi-channel sound.

Referring to FIG. 3B, when the foldable electronic apparatus 200 is in a partially folded state (e.g., only the second hinge 255 is folded), the foldable display 260 may be partially covered, so that only the first display region 261 of the foldable display 260 may be activated. In this state, the first speaker 220a and the third speaker 220c may be positioned on the left side with respect to the user, and the second speaker 220b and the fourth speaker 220d may be positioned on the right side with respect to the user.

Referring to FIGS. 3C and 3D, when the foldable electronic apparatus 200 is in a fully folded state (e.g., when both the first hinge 254 and the second hinge 255 are folded (which may be referred to as a "second state"), the first speaker 220a and the third speaker 220c may be positioned on the right side with respect to the user and the second speaker 220b and the fourth speaker 220d may be positioned on the left side with the user. In this state, due to the change in the relative left and right positions of the speakers 220a, 220b, 220c, 220d with respect to the user, the audio channels output from the speakers may be changed. For example, the first speaker 220a and the third speaker 220c may output the right audio channel, and the second speaker 220b and the fourth speaker 220d may output the left audio channel.

Referring again to FIGS. 3A to 3C, when the user orients the foldable electronic apparatus 200 such that the direction of the hinge (the y-axis direction in the drawings) is horizontal with respect to the user (this may be referred to as a "portrait orientation"') during use, for example, the first speaker 220a and the second speaker 220b may be positioned on the left, and the third speaker 220c and the fourth speaker 220d may be positioned on the right. (Alternatively, when the foldable electronic apparatus 200 is oriented in the opposite direction, the first speaker 220a and the second speaker 220b may be positioned on the right, and the third speaker 220c and the fourth speaker 220d may be positioned on the left.) In this state, despite the folded first hinge 254 and/or the second hinge 255, the relative left and right positions of the speakers 220a, 220b, 220c, 220d may not be changed.

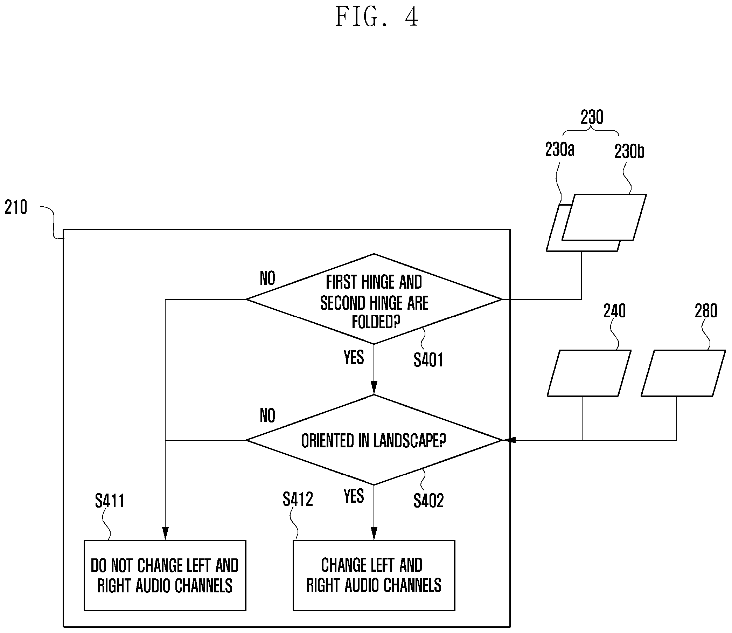

FIG. 4 is a flowchart illustrating the operation of the processor 210 of the foldable electronic apparatus 200 according to various embodiments of the disclosure.

Referring to FIG. 4, the processor 210 may determine whether the first hinge 254 and the second hinge 255 are folded, based on the value detected by the folding sensor 230 (S401). When at least one of the first hinge 254 and the second hinge 255 is unfolded, the audio channels assigned to the corresponding speakers may not be changed because the relative left and right positions of the speakers 220a, 220b, 220c, 220d have not been changed (S411). For example, the first speaker 220a and the third speaker 220c may output the left audio channel, and the second speaker 220b and the fourth speaker 220d may output the right audio channel. Since the relative left and right positions of the speakers 220a, 220b, 220c, 220d are changed in the state where both the first hinge 254 and the second hinge 255 are folded (the second state), the left and right audio channels assigned to the speakers may be changed (S412). For example, the first speaker 220a and the third speaker 220c may output the right audio channel, and the second speaker 220b and the fourth speaker 220d may output the left audio channel.

Referring again to FIG. 4, the processor 210 may determine the orientation of the foldable electronic apparatus 200, based on the value detected by the display controller 280 and the attitude sensor 240 (S402). For example, in case that the foldable electronic apparatus 200 is oriented such that the hinges are horizontal with respect to the user, the processor 210 may not change the audio channels assigned to the speakers because the relative left and right positions of the speakers 220a, 220b, 220c, 220d have not been changed even when both the first hinge 254 and the second hinge 255 are folded. For example, the first speaker 220a and the third speaker 220c may output a left audio channel, and the second speaker 220b and the fourth speaker 220d may output a right audio channel. In contrast, when the foldable electronic apparatus 200 is oriented such that the hinges are vertical with respect to the user, the audio channel assigned to the speaker may be changed when the first hinge 254 and the second hinge 255 are folded.

The orientation of the foldable electronic apparatus 200 may be measured by the attitude sensor 240 (e.g., the gravity sensor 240a or the gyro sensor 240b) and/or determined by the display controller 280. For example, when the foldable display 260 is arranged horizontally with respect to the direction of gravity, measuring the orientation of the foldable electronic apparatus 200 with the attitude sensor 240 may be limited. Thus, the processor 210 may determine the orientation of the foldable electronic apparatus 200, based on the display mode information (e.g., whether the foldable display 260 is currently in portrait mode or landscape mode) provided by the display controller 280.

FIG. 4 illustrates an embodiment in which an operation (S401) of determining whether the first hinge 254 and the second hinge 255 are folded is executed before an operation (S402) of determining the orientation of the foldable electronic apparatus 200. However, it will be apparent to those skilled in the art that the operations (S401, S402) are connected to operations (S411, S412) in which a change occurs or does not occur in the audio channels by logical AND operation. Accordingly, an embodiment in which the processor 210 is configured to execute an operation (S402) of determining the orientation of the foldable electronic apparatus 200 before or simultaneously with an operation (S401) of determining whether the first hinge 254 and the second hinge 255 are folded may be also possible and be included in the scope of the disclosure.

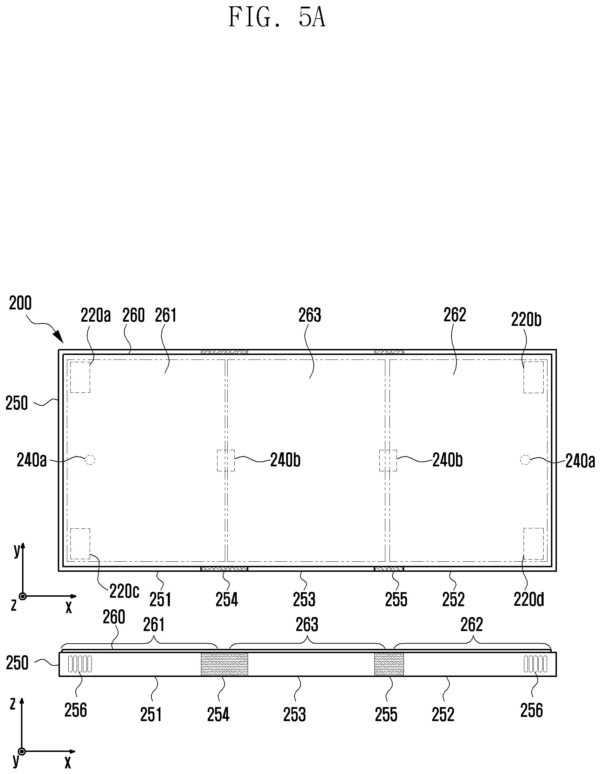

FIG. 5A is a plan view and a cross-sectional view of the foldable electronic apparatus 200 in a fully unfolded state, according to various embodiments.

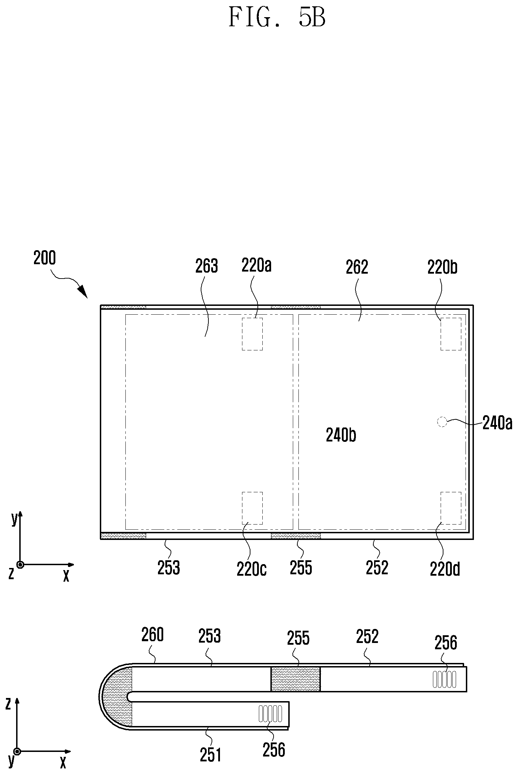

FIG. 5B is a plan view and a cross-sectional view of the foldable electronic apparatus 200 being folded, according to various embodiments.

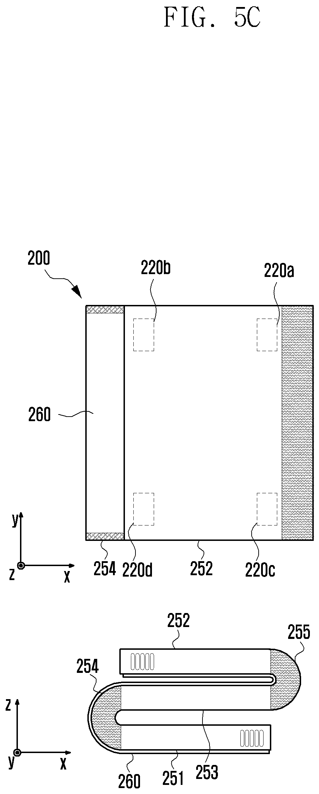

FIG. 5C is a plan view and a cross-sectional view of the foldable electronic apparatus 200 in a fully folded state, according to various embodiments.

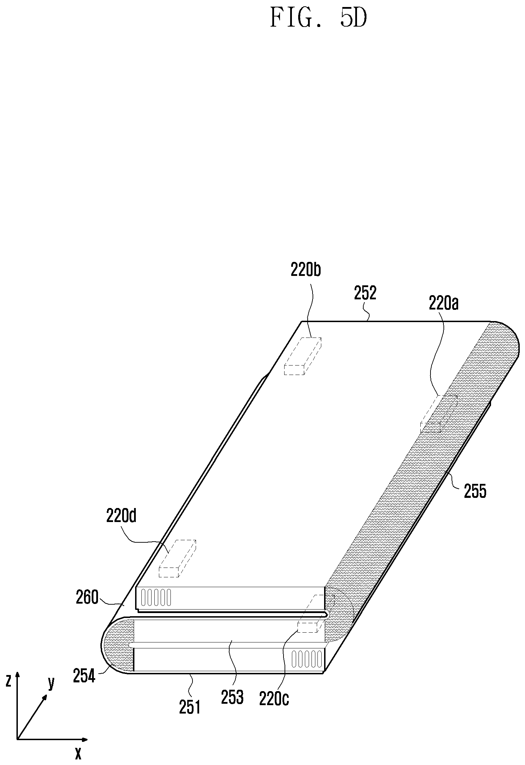

FIG. 5D is a perspective view of the foldable electronic apparatus 200 in a fully folded state, according to various embodiments.

FIG. 5E is a perspective view of the bottom surface of the foldable electronic apparatus 200 in a fully folded state, according to various embodiments.

The descriptions of FIGS. 3A to 3D may be referred to for the components of FIGS. 5 to 5E, provided that no contradictions exist.

Referring to FIGS. 5A to 5D, the foldable electronic apparatus 200 may include a foldable housing 250. The foldable housing 250 may include a first sub-housing 251, a third sub-housing 253, a second sub-housing 252, a first hinge 254, and a second hinge 255. The first hinge 254 may foldably couple the first sub-housing 251 and the third sub-housing 253 to each other, and the second hinge 255 may foldably couple the third sub-housing 253 and the second sub-housing 252 to each other.

In various embodiments, the folding directions of the first hinge 254 and the second hinge 255 may be opposite to each other. For example, the first hinge 254 may be rotated such that the first sub-housing 251 is folded downward (in the opposite direction of the z-axis in the drawing), and the second hinge 255 may be rotated such that the second sub-housing 252 is folded upward (in the z-axis direction in the drawing), but are not limited thereto. For example, the first hinge 254 may also be rotated such that the first sub-housing 251 is folded upward (in the z-axis direction in the drawing), and the second hinge 255 may also be rotated such that the second sub-housing 252 is folded downward (in the opposite direction of the z-axis in the drawing).

In various embodiments, a first speaker 220a and a third speaker 220c may be arranged in the first sub-housing 251, and a second speaker 220b and a fourth speaker 220d may be arranged in the second sub-housing 252. Referring to FIG. 5A, when the hinges are oriented vertically with respect to a user (which may be referred to as a "landscape orientation" because the long axis is oriented horizontally with respect to the user) while the foldable electronic apparatus 200 is in a fully unfolded state (the first state), in one example, the first speaker 220a and the third speaker 220c may be positioned on the left side with respect to the user, and the second speaker 220b and the fourth speaker 220d may be positioned on the right side with respect to the user. In this orientation, the first speaker 220a and the third speaker 220c may output a left audio channel of multi-channel sound (e.g., stereo sound), and the second speaker 220b and the fourth speaker 220d may output a right audio channel of the multi-channel sound.

Referring to FIG. 5B, when the foldable electronic apparatus 200 is in a partially folded state (e.g., only the first hinge 254 is folded), the foldable display 260 may be partially covered, so that only the third display region 263 and the second display region 262 of the foldable display 260 may be activated. In this state, the first speaker 220a and the third speaker 220c may be positioned on the left side with respect to the user, and the second speaker 220b and the fourth speaker 220d may be positioned on the right side with respect to the user.

Referring to FIGS. 5C and 5D, when the foldable electronic apparatus 200 is in a fully folded state (e.g., when both the first hinge 254 and the second hinge 255 are folded), the first speaker 220a and the third speaker 220c may be positioned on the right side with respect to the user and the second speaker 220b and the fourth speaker 220d may be positioned on the left side with the user. In this state, due to the change in the relative left and right positions of the speakers 220a, 220b, 220c, 220d, the audio channels output from the speakers may be changed. For example, the first speaker 220a and the third speaker 220c may output the right audio channel, and the second speaker 220b and the fourth speaker 220d may output the left audio channel.

Referring again to FIGS. 5A to 5C, when the user orients the foldable electronic apparatus 200 such that the direction of the hinges (the y-axis direction in the drawings) is horizontal with respect to the user during use, for example, the first speaker 220a and the second speaker 220b may be positioned on the left, and the third speaker 220c and the fourth speaker 220d may be positioned on the right. (Alternatively, when the foldable electronic apparatus 200 is oriented in the opposite direction, the first speaker 220a and the second speaker 220b may also be positioned on the right, and the third speaker 220c and the fourth speaker 220d may also be positioned on the left.) In this state, despite the folded first hinge 254 and/or the second hinge 255, the relative left and right positions of the speakers 220a, 220b, 220c, 220d may not be changed.

Referring to FIG. 5E, in a state where the user orients and uses the foldable electronic apparatus 200 such that the hinges are vertical with respect to the user (i.e., landscape mode), when the use mode is changed to a state where the exposed part of the foldable display 260, such as the first display region 261, is used by folding the first hinge 254 and the second hinge 255, the vertical direction (z-axis direction) of the foldable electronic apparatus 200 is reversed. Accordingly, even though the foldable electronic apparatus is folded, the relative left and right positions between the first and third speakers 220c and between the third and fourth speakers 220d may not be changed. Therefore, despite the folded first hinge 254 and/or the second hinge 255, the relative left and right positions of the speakers 220a, 220b, 220c, 220d may not be changed.

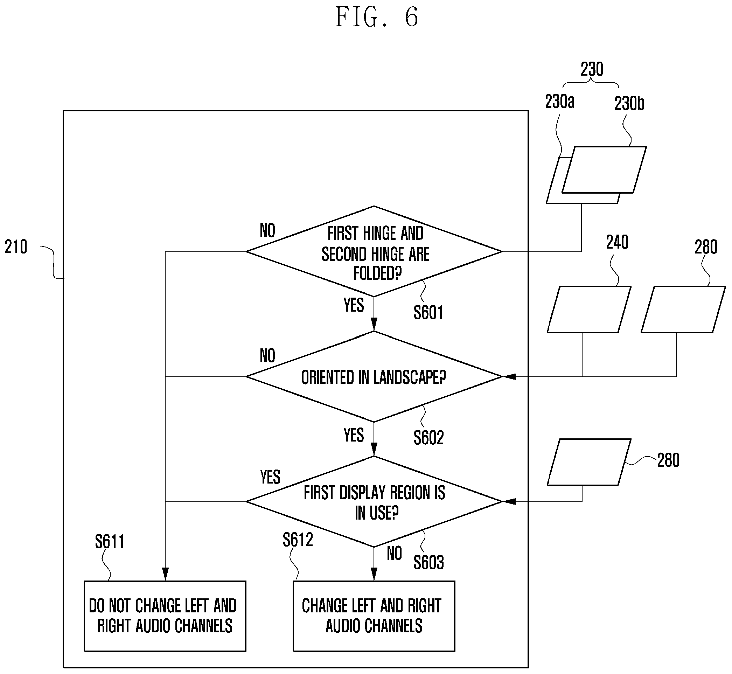

FIG. 6 is a flowchart illustrating the operation of the processor 210 of the foldable electronic apparatus 200, according to various embodiments of the disclosure.

Referring to FIG. 6, the processor 210 may determine whether the first hinge 254 and the second hinge 255 are folded, based on the value detected by the folding sensor 230 (S601). When both the first hinge 254 and the second hinge 255 are not folded, the audio channels assigned to the corresponding speakers may not be changed because the relative left and right positions of the speakers 220a, 220b, 220c, 220d have not been changed (S611). For example, the first speaker 220a and the third speaker 220c may output the right audio channel, and the second speaker 220b and the fourth speaker 220d may output the left audio channel.

The processor 210 may determine the orientation of the foldable electronic apparatus 200, based on the value detected by the display controller 280 and the attitude sensor 240 (S602). For example, in case that the foldable electronic apparatus 200 is oriented such that the hinges are horizontal with respect to the user, the processor 210 may not change the audio channels assigned to the speakers because the relative left and right positions of the speakers 220a, 220b, 220c, 220d have not been changed even when both the first hinge 254 and the second hinge 255 are folded (S611). In addition, in case that the foldable electronic apparatus 200 is oriented such that the hinges are vertical with respect to the user (i.e., landscape mode), the audio channels assigned to the speakers may be changed when the first hinge 254 and the second hinge 255 are folded (S612).

The orientation of the foldable electronic apparatus 200 may be measured by the attitude sensor 240 (e.g., the gravity sensor 240a or the gyro sensor 240b) and/or determined by the display controller 280. For example, when the foldable display 260 is arranged horizontally with respect to the direction of gravity, measuring the orientation of the foldable electronic apparatus 200 with the attitude sensor 240 may be limited. Thus, the processor 210 may determine the orientation of the foldable electronic apparatus 200, based on the display mode information (e.g., whether the foldable display 260 is currently in portrait mode or landscape mode) provided by the display controller 280.

The processor 210 may determine whether the first display region 261 is in use, based on the value detected by the display controller 280 (S603). In a case that a part (e.g., the first display region 261) of the foldable display 260 is in use in a state where the foldable electronic apparatus 200 is in a folded state, when the foldable electronic apparatus 200 is oriented such that the hinges are vertical with respect to the user, the left and right audio channels assigned to the speakers may not be changed because the relative left and right positions of the speakers 220a, 220b, 220c, 220d have not been changed despite the folding (S611). The part of the foldable display 260 that is in use may be determined, based on the value transmitted from the display controller 280 to the processor 210 (S603).

Referring to FIG. 6, the processor 210 may determine whether to change the left and right of the audio channels (S611, S612) by processing the results of the determination operations (S601, S602, S603) through a logical AND operation. Therefore, it will be apparent to those skilled in the art that the determination operations (S601, S602, S603) may be processed in a different order or simultaneously.

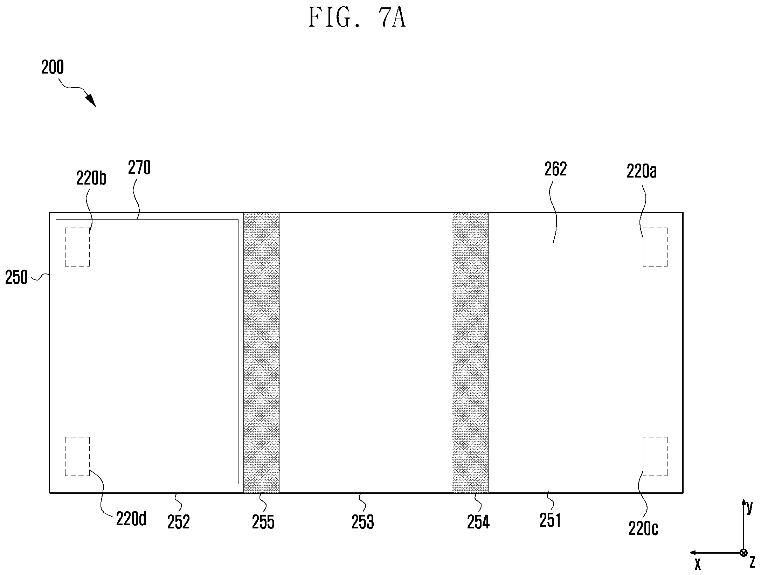

FIG. 7A is a rear plan view of the foldable electronic apparatus 200 according to various embodiments.

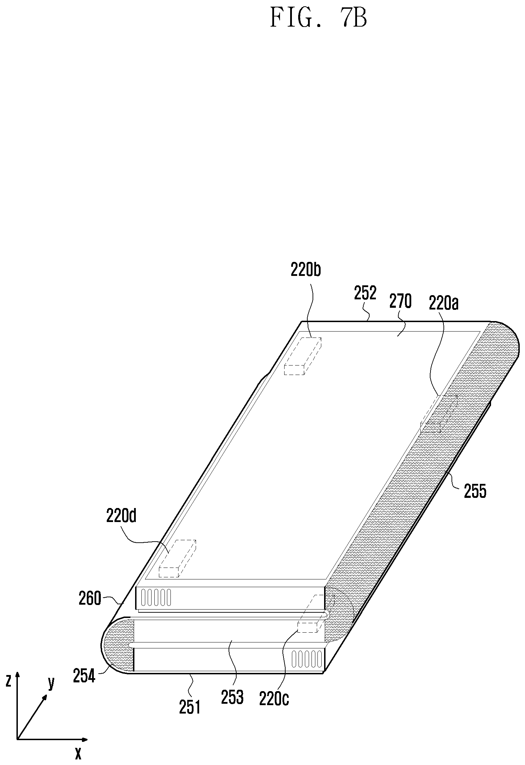

FIG. 7B is a perspective view of the foldable electronic apparatus 200 in a folded state, according to various embodiments.

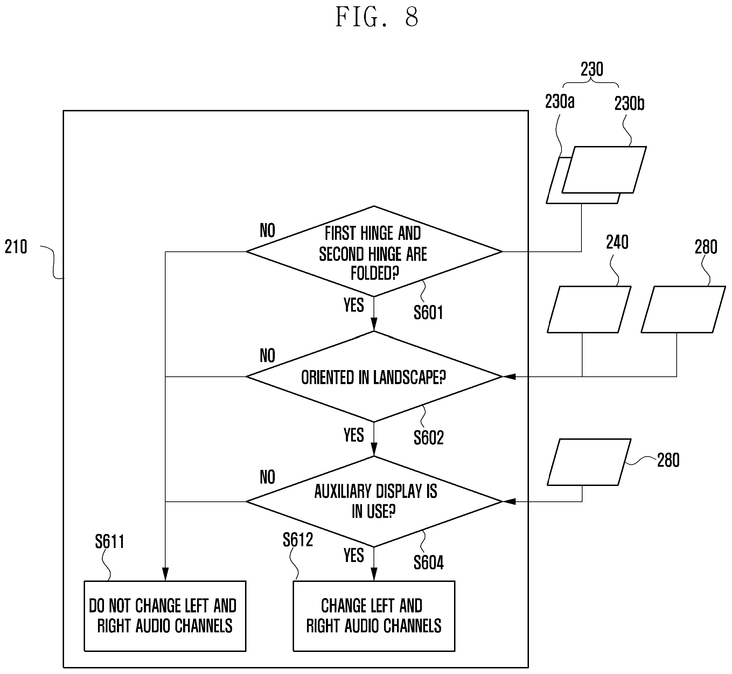

FIG. 8 is a flowchart illustrating the operation of the processor 210 according to various embodiments.

Referring to FIGS. 7A and 7B, the foldable electronic apparatus 200 may include an auxiliary display 270. The auxiliary display 270 may be arranged on a surface (e.g., a rear surface) of at least one (e.g., the second sub-housing 252) of the first sub-housing 251 and the second sub-housing 252, the surface facing in a direction opposite (e.g., in the opposite direction of the z-axis) the direction in which the foldable display 260 is arranged (e.g., in the z-axis direction). The auxiliary display 270 may be a display for use when the foldable electronic apparatus 200 is folded. For example, referring to FIG. 7B, the auxiliary display 270 may be a display facing upward (e.g., in the z direction in the drawing) to be visible to the user when the foldable electronic apparatus 200 is folded.

When the user transitions the foldable electronic apparatus 200 from a fully unfolded state (first state) to a folded state (second state) to use the auxiliary display 270, the relative left and right positions of the plurality of speakers 220a, 220b, 220c, 220d may be changed with respect to the user. Referring to FIG. 8, the processor 210 may determine whether the auxiliary display 270 is in use, through information obtained from the display controller 280 (S604), and based on this, the processor 210 may change (S612) or may not change (S611) the left and right of the audio channels output from the plurality of speakers 220a, 220b, 220c, 220d. For example, in the unfolded state, the first audio channel (e.g., left audio channel) may be output from the first speaker 220a and the third speaker 220c, and the second audio channel (e.g., right audio channel) may be output from the second speaker 220b and the fourth speaker 220d. However, when the first hinge 254 and the second hinge 255 are folded and the auxiliary display 270 is used, the output may be switched such that the second audio channel is output from the first speaker 220a and the third speaker 220c, and the first audio channel is output from the second speaker 220b and the fourth speaker 220d. The processor 210 may determine whether to change the left and right of the audio channels (S611, S612) by processing the results of the determination operations (S601, S602, S603) shown in FIG. 8 through a logical AND operation. Therefore, it will be apparent to those skilled in the art that the determination operations (S601, S602, S603) may be processed in a different order or simultaneously.

A foldable electronic apparatus 100, 200 according to various embodiments of the disclosure may include a foldable housing 250 having a plurality of sub-housings and at least one hinge disposed between the plurality of sub-housings, the foldable housing 250 being configured to be folded and unfolded, a foldable display 260 disposed on a first surface of the foldable housing 250 and configured to be folded and unfolded according to folding and unfolding of the foldable housing 250, the first surface facing a first direction, a first speaker 220a and a second speaker 220b, the first speaker being disposed in a first sub-housing 251 among the plurality of sub-housings of the foldable housing 250 and the second speaker being disposed in a second sub-housing 252 spaced apart from the first sub-housing 251, and a processor 210 electrically connected to the first speaker 220a and the second speaker 220b. The processor 210 may be configured to output a first audio channel of a designated sound source through the first speaker 220a and a second audio channel of the designated sound source through the second speaker 220b when a relative position between the first speaker 220a and the second speaker 220b corresponds to a first state, detect a change in a folding state of the foldable housing 250, determine the relative position between the first speaker 220a and the second speaker 220b, based on the change in the folding state, and when the relative position between the first speaker 220a and the second speaker 220b is determined to have shifted from the first state to a second state, output the second audio channel of the designated sound source through the first speaker 220a and the first audio channel of the designated sound source through the second speaker 220b.

In various embodiments, the foldable electronic apparatus may include a folding sensor 230 configured to detect a folding and unfolding state of the foldable housing 250, and the processor 210 may be configured to determine a change in the folding state, based on a value detected by the folding sensor 230.

In various embodiments, the foldable housing 250 includes a third sub-housing 253 disposed between the first sub-housing 251 and the second sub-housing 252, the at least one hinge may include a first hinge 254 configured to foldably couple the first sub-housing 251 and the third sub-housing 253 to each other, and a second hinge 255 configured to foldably couple the second sub-housing 252 and the third sub-housing 253 to each other, and the first sub-housing 251 may further include a third speaker 220c and the second sub-housing 252 may further include a fourth speaker 220d.

In various embodiments, the first speaker 220a and the third speaker 220c may be positioned in the first sub-housing 251 to be opposite to the direction in which the first hinge 254 is coupled, and the second speaker 220b and the fourth speaker 220d may be positioned in the second sub-housing 252 to be opposite to the direction in which the second hinge 255 is coupled.

In various embodiments, the folding directions of the first hinge 254 and the second hinge 255 are the same, and the processor 210 may be configured to output, in an unfolded state of the first hinge 254 and the second hinge 255, the first audio channel through the first speaker 220a and the third speaker 220c and the second audio channel through the second speaker 220b and the fourth speaker 220d and output, in a folded state of the first hinge 254 and the second hinge 255, the first audio channel through the second speaker 220b and the fourth speaker 220d and the second audio channel through the first speaker 220a and the third speaker 220c.

In various embodiments, the processor 210 may determine the orientation direction of the foldable electronic apparatus 100, 200, and, when the foldable electronic apparatus 100, 200 is oriented in a horizontal direction based on the long axis thereof, may output, in an unfolded state of the first hinge 254 and the second hinge 255, the first audio through the first speaker 220a and the third speaker 220c and the second audio channel through the second speaker 220b and the fourth speaker 220d and output, in a folded state of the first hinge 254 and the second hinge 255, the first audio channel through the second speaker 220b and the fourth speaker 220d and the second audio channel through the first speaker 220a and the third speaker 220c.

In various embodiments, the foldable electronic apparatus 100, 200 may include an attitude sensor 240 configured to measure the orientation thereof, and the processor 210 may determine the orientation of the foldable electronic apparatus 100, 200, based on the value detected by the attitude sensor 240.

In various embodiments, the foldable electronic apparatus may include a display controller 280 configured to control the foldable display 260, and the processor 210 may determine the orientation of the foldable electronic apparatus 100, 200, based on the orientation of an image displayed on the foldable display 260.

In various embodiments, the folding directions of the first hinge 254 and the second hinge 255 may be opposite to each other, and the processor 210 may be configured to output, in an unfolded state of the first hinge 254 and the second hinge 255, the first audio channel through the first speaker 220a and the third speaker 220c and the second audio channel through the second speaker 220b and the fourth speaker 220d and output, in a folded state of the first hinge 254 and the second hinge 255, the first audio channel through the second speaker 220b and the fourth speaker 220d and the second audio channel through the first speaker 220a and the third speaker 220c.

In various embodiments, the processor 210 may determine the orientation of the foldable electronic apparatus 100, 200, based on the value detected by the attitude sensor 240 and, when the foldable electronic apparatus 100, 200 is oriented such that the hinges 254, 255 are vertical with respect to the user, may output, in a state where the first hinge 254 and the second hinge 255 are unfolded, the first audio channel through the first speaker 220a and the third speaker 220c and the second audio channel through the second speaker 220b and the fourth speaker 220d and output, in a state where the first hinge 254 and the second hinge 255 are folded, the first audio channel through the second speaker 220b and the fourth speaker 220d and the second audio channel through the first speaker 220a and the third speaker 220c.

In various embodiments, the foldable electronic apparatus 100, 200 may include an attitude sensor 240 configured to measure the orientation thereof, and the processor 210 may determine a direction in which the foldable electronic apparatus 100, 200 is oriented, based on the value detected by the attitude sensor 240.

In various embodiments, the foldable electronic apparatus may include a display controller 280 configured to control the foldable display 260, and the processor 210 may determine a direction in which the foldable electronic apparatus 100, 200 is oriented, based on the orientation of an image displayed on the display.

In various embodiments, the foldable display 260 may include a first display region 261 positioned in the first sub-housing 251, a second display region 262 positioned in the second sub-housing 252, and a third display region 263 positioned in the third sub-housing 253, wherein the foldable housing 250 is folded such that the first display region 261 is exposed to the outside when folded. The processor 210 may determine whether the first display region 261 is in operation and may output the first audio channel through the first speaker 220a and the third speaker 220c and the second audio channel through the second speaker 220b and the fourth speaker 220d when the first display is in use while first hinge 254 and the second hinge 255 are folded.

In various embodiments, the foldable electronic apparatus may include an auxiliary display 270 disposed on a surface of the third housing, the surface being opposite surface on which the foldable display 260 is disposed, and the processor 210 may be configured to determine whether the auxiliary display 270 is in operation and output the first audio channel through the second speaker 220b and the fourth speaker 220d and the second audio channel through the first speaker 220a and the third speaker 220c when the auxiliary display 270 is in use while the first hinge 254 and the second hinge 255 are folded.

According to various embodiments of the disclosure, a processor 210 of a foldable electronic apparatus 100, 200 including a foldable housing 250 having a plurality of sub-housings and at least one hinge and configured to be folded and unfolded, a foldable display 260 arranged on a first surface of the foldable housing 250 and configured to be folded and unfolded according to the folding and unfolding of the foldable housing 250, the first surface facing a first direction, and a plurality of speakers 220a, 220b, 220c, 220d positioned in at least two of the plurality of sub-housings of the foldable housing 250 and configured to output multi-channel sounds having a plurality of audio channels, may be electrically connected to the plurality of speakers and may be configured to detect a folding state of the foldable housing 250, calculate respective relative positions of the plurality of speakers, based on the folding state, and output the plurality of audio channels to the plurality of speakers, respectively, based on the calculated respective relative positions of the plurality of speakers.

In various embodiments, the electronic apparatus may include a folding sensor 230 configured to detect the folding and unfolding state of the foldable housing 250, and the processor 210 may detect the folding and unfolding state of the foldable housing 250 through the folding sensor 230.

In various embodiments, the foldable housing 250 may include a first sub-housing 251, a second sub-housing 252, a third sub-housing 253, a first hinge 254 configured to foldably couple the first sub-housing 251 and the second sub-housing 252 to each other, and a second hinge 255 configured to foldably couple the second sub-housing 252 and the third sub-housing 253 to each other, the plurality of speakers of the electronic apparatus may include a first speaker 220a and a third speaker 220c arranged in the first sub-housing 251 and a second speaker 220b and a fourth speaker 220d arranged in the third sub-housing 253, and the plurality of audio channels may include a first audio channel and a second audio channel.

In various embodiments, the processor 210 may determine the orientation direction of the foldable electronic apparatus 100, 200 and, when the foldable electronic apparatus 100, 200 is oriented such that the hinges 254, 255 are vertical with respect to the user, may output, in a state where the first hinge 254 and the second hinge 255 are unfolded, the first audio channel through the first speaker 220a and the third speaker 220c and the second audio channel through the second speaker 220b and the fourth speaker 220d and output, in a state where the first hinge 254 and the second hinge 255 are folded, the first audio channel through the second speaker 220b and the fourth speaker 220d and the second audio channel through the first speaker 220a and the third speaker 220c.

In various embodiments, the foldable electronic apparatus 100, 200 may include an attitude sensor 240 configured to measure the orientation thereof, and may determine a direction in which the foldable electronic apparatus 100, 200 is oriented, based on the value detected by the attitude sensor 240.

In various embodiments, the foldable display 260 may include a display controller 280 configured to control the foldable display 260, wherein the orientation of the foldable electronic apparatus 100, 200 may be determined based on the orientation of an image displayed on the foldable display 260.

In various embodiments, the foldable electronic apparatus 100, 200 may include an auxiliary display 270 disposed on a surface of the second sub-housing 252, the surface being opposite a surface on which the foldable display 260 is disposed, and the processor 210 may be configured to determine whether the auxiliary display 270 is in operation and may output the first audio channel through the second speaker 220b and the fourth speaker 220d and the second audio channel through the first speaker 220a and the third speaker 220c when the auxiliary display 270 is in use while the first hinge 254 and the second hinge 255 are folded.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. Therefore, the scope of various embodiments of the disclosure should be construed to include, in addition to the embodiments set forth herein, all changes and modifications derived based on the technical idea of various embodiments of the disclosure.

## Claims

1. A foldable electronic apparatus comprising:
a foldable housing having a plurality of sub-housings and at least one hinge arranged between the plurality of sub-housings, and configured to be folded and unfolded;
a foldable display disposed on a first surface of the foldable housing and configured to be folded and unfolded according to folding and unfolding of the foldable housing, the first surface facing a first direction;
a first speaker disposed in a first sub-housing among the plurality of sub-housings of the foldable housing, and a second speaker disposed in a second sub-housing spaced apart from the first sub-housing; and
a processor electrically connected to the first speaker and the second speaker,
wherein the processor is configured to:
in case that a relative position between the first speaker and the second speaker is in a first state, output a first audio channel of a designated sound source through the first speaker and a second audio channel of the designated sound source through the second speaker;
detect a change in the folding state of the foldable housing;
determine a relative position between the first speaker and the second speaker, based on the change in the folding state; and
in case that the relative position between the first speaker and the second speaker is determined to transition from the first state to a second state, output the second audio channel of the designated sound source through the first speaker and output the first audio channel of the designated sound source through the second speaker.

2. The foldable electronic apparatus of claim 1, wherein the foldable housing comprises a third sub-housing disposed between the first sub-housing and the second sub-housing,
wherein the at least one hinge comprises a first hinge configured to foldably couple the first sub-housing and the third sub-housing to each other, and a second hinge configured to foldably couple the second sub-housing and the third sub-housing to each other, and
wherein the first sub-housing further comprises a third speaker, and the second sub-housing further comprises a fourth speaker.

3. The foldable electronic apparatus of claim 2, wherein the first speaker and the third speaker are positioned in the first sub-housing to be opposite to a direction in which the first hinge is coupled, and
wherein the second speaker and the fourth speaker are positioned in the second sub-housing to be opposite to a direction in which the second hinge is coupled.

4. The foldable electronic apparatus of claim 3, wherein folding directions of the first hinge and the second hinge are identical to each other, and
wherein the processor is configured to:
output the first audio channel through the first speaker and the third speaker and output the second audio channel through the second speaker and the fourth speaker in a state where the first hinge and the second hinge are unfolded; and
output the first audio channel through the second speaker and the fourth speaker and output the second audio channel through the first speaker and the third speaker in a state where the first hinge and the second hinge are folded.

5. The foldable electronic apparatus of claim 4, wherein the processor is configured to:
determine a direction in which the foldable electronic apparatus is oriented; and
in case that the foldable electronic apparatus is oriented in a horizontal direction with respect to the long axis thereof, output the first audio channel through the first speaker and the third speaker and output the second audio channel through the second speaker and the fourth speaker in a state where the first hinge and the second hinge are unfolded, and output the first audio channel through the second speaker and the fourth speaker and output the second audio channel through the first speaker and the third speaker in a state where the first hinge and the second hinge are folded.

6. The foldable electronic apparatus of claim 5, comprising an attitude sensor configured to measure orientation of the foldable electronic apparatus,
wherein the processor is configured to determine a direction in which the foldable electronic apparatus is oriented, based on a value detected by the attitude sensor.

7. The foldable electronic apparatus of claim 5, comprising a display controller configured to control the foldable display,
wherein the processor is configured to determine orientation of the foldable electronic apparatus, based on orientation of an image displayed on the foldable display.

8. The foldable electronic apparatus of claim 3, wherein folding directions of the first hinge and the second hinge are opposite to each other, and
wherein the processor is configured to:
output the first audio channel through the first speaker and the third speaker and output the second audio channel through the second speaker and the fourth speaker in a state where the first hinge and the second hinge are unfolded; and
output the first audio channel through the second speaker and the fourth speaker and output the second audio channel through the first speaker and the third speaker in a state where the first hinge and the second hinge are folded.

9. The foldable electronic apparatus of claim 8, wherein the foldable display comprises a first display region positioned in the first sub-housing, a second display region positioned in the second sub-housing, and a third display region positioned in the third sub-housing,
wherein the foldable housing is folded such that the first display region is exposed to the outside in a folded state, and
wherein the processor is configured to:
determine whether the first display region is in operation; and
in case that the first display is in use in a state where the first hinge and the second hinge are folded, output the first audio channel through the first speaker and the third speaker and output the second audio channel through the second speaker and the fourth speaker.

10. The foldable electronic apparatus of claim 8, comprising an auxiliary display disposed on a surface of the third housing, opposite to the surface on which the foldable display is disposed,
wherein the processor is configured to:
determine whether the auxiliary display is in operation; and
in case that the auxiliary display is in use in a state where the first hinge and the second hinge are folded, output the first audio channel through the second speaker and the fourth speaker and output the second audio channel through the first speaker and the third speaker.

11. A processor of a foldable electronic apparatus comprising a foldable housing having a plurality of sub-housings and at least one hinge and configured to be folded and unfolded, a foldable display disposed on a first surface of the foldable housing and configured to be folded and unfolded according to folding and unfolding of the foldable housing, the first surface facing a first direction, and a plurality of speakers positioned in at least two of the plurality of sub-housings of the foldable housing and configured to output a multi-channel sound having a plurality of audio channels, wherein the processor is electrically connected to the plurality of speakers and is configured to:
detect a folding state of the foldable housing;
calculate a relative position of each the plurality of speakers, based on the folding state; and
output the plurality of audio channels through the plurality of speakers, respectively, based on the calculated relative position of each of the plurality of speakers.

12. The processor of claim 11, wherein the foldable housing comprises a first sub-housing, a second sub-housing, a third sub-housing, a first hinge configured to foldably couple the first sub-housing and the second sub-housing to each other, and a second hinge configured to foldably couple the second sub-housing and the third sub-housing to each other,
wherein the plurality of speakers of the electronic apparatus comprise a first speaker and a third speaker arranged in the first sub-housing, and a second speaker and a fourth speaker arranged in the third sub-housing,
wherein the plurality of audio channels comprise a first audio channel and a second audio channel,
wherein the foldable electronic apparatus comprises an auxiliary display disposed on a surface of the second sub-housing, opposite to the surface on which the foldable display is disposed, and
wherein the processor is configured to:
determine whether the auxiliary display is in operation; and
in case that the auxiliary display is in use in a state where the first hinge and the second hinge are folded, output the first audio channel through the second speaker and the fourth speaker and output the second audio channel through the first speaker and the third speaker.

13. The processor of claim 11, wherein the processor is configured to:
determine a direction in which the foldable electronic apparatus is oriented; and
in case that the foldable electronic apparatus is oriented such that the hinges are vertical with respect to a user, output the first audio channel through the first speaker and the third speaker and output the second audio channel through the second speaker and the fourth speaker in a state where the first hinge and the second hinge are unfolded, and output the first audio channel through the second speaker and the fourth speaker and output the second audio channel through the first speaker and the third speaker in a state where the first hinge and the second hinge are folded.

14. The processor of claim 13, wherein the foldable electronic apparatus comprises an attitude sensor configured to measure orientation of the foldable electronic apparatus, and
wherein a direction in which the foldable electronic apparatus is oriented is determined based on a value detected by the attitude sensor.

15. The processor of claim 13, wherein the foldable display comprises a display controller configured to control the foldable display, and
wherein a direction in which the foldable electronic apparatus is oriented is determined based on orientation of an image displayed on the foldable display.
